# FASCICULE DE BREVET EUROPEEN

(11) **EP 3 526 085 B1**
(45) Date de publication et mention de la délivrance du brevet: **22.06.2022**
(21) Numéro de dépôt: 17781129.6
(22) Date de dépôt: 10.10.2017
(51) Int. Cl.: B60S 1/50, B65D 75/58

(54) **RÉSERVOIR À LIQUIDE DE NETTOYAGE D'UN PAREBRISE DE VÉHICULE AUTOMOBILE, SUPPORT D'UN TEL RÉSERVOIR ET ENSEMBLE COMPRENANT DE TELS RÉSERVOIR ET SUPPORT**
KRAFTFAHRZEUGSCHEIBENWISCHERREINIGUNGSFLÜSSIGKEITSBEHÄLTER, TRÄGER FÜR SOLCH EINEN BEHÄLTER UND ANORDNUNG MIT SOLCH EINEM BEHÄLTER UND TRÄGER
MOTOR VEHICLE WINDSCREEN CLEANING LIQUID CONTAINER, SUPPORT FOR SUCH A CONTAINER AND ASSEMBLY COMPRISING SUCH A CONTAINER AND SUPPORT

(30) Priorité: 11.10.2016 FR 1659779
(43) Date de publication de la demande: 21.08.2019
(73) Titulaire: Valeo Systèmes d'Essuyage, 78322 Le Mesnil Saint Denis (FR)
(72) Inventeur: BARRET, Guillaume, 63500 Issoire (FR); THEBAULT, Denis, 63500 Issoire (FR)
(74) Mandataire: Valeo Visibility
(86) Numéro de dépôt international: PCT/EP2017/075831
(87) Numéro de publication internationale: WO 2018/069332

(56) Documents cités:
- DE-A1-102005 051 735
- FR-A- 1 361 424
- GB-A- 754 277
- US-A- 2 703 127
- US-A- 2 791 392
- US-A- 3 212 661
- US-A- 3 533 526

## Description

Le domaine de la présente invention est celui des dispositifs de nettoyage d'une surface vitrée d'un véhicule automobile, parebrise notamment. L'invention relève plus spécifiquement des contenants à liquide que comportent de tels dispositifs de nettoyage. De tels contenants à liquide interchangeables, appelés par la suite réservoir, peuvent être installés sur un support installé sur le véhicule.

Les véhicules automobiles sont classiquement équipés d'un système de lavage pour nettoyer une ou plusieurs surfaces vitrées du véhicule, parebrise notamment. Ces systèmes de lavage comprennent un dispositif de nettoyage permettant de pulvériser un liquide de nettoyage vers la surface vitrée. Le dispositif de nettoyage comprend typiquement une réserve dudit liquide et un circuit d'acheminement du liquide vers la surface vitrée. La réserve est classiquement placée sous le capot du véhicule, et le circuit comporte une pompe d'entraînement du liquide depuis la réserve vers la surface vitrée.

Selon une forme connue d'agencement de la réserve, un support est installé sur le véhicule pour recevoir un réservoir contenant le liquide. Le réservoir est monté amovible sur le support en étant interchangeable pour son remplacement. Un remplacement du réservoir est par exemple effectué après épuisement de son contenu, et/ou pour alterner le nettoyage de la surface vitrée avec des liquides spécifiques, notamment selon les saisons et les variations significatives de température qui en résultent.

A cet effet, le support est équipé d'un organe de montage du réservoir procurant une fixation mécanique réversible entre eux et un raccordement fluidique entre le réservoir et le circuit. Le réservoir est muni d'un embout comportant un moyen de fixation apte à coopérer avec un moyen de liaison mécanique équipant l'organe de montage. Lorsque le réservoir est installé sur le support, le moyen de fixation de l'embout et le moyen de liaison de l'organe de montage sont placés en coopération, ce qui procure la fixation mécanique du réservoir sur le support et la mise en communication fluidique entre le réservoir et le circuit acheminant le liquide depuis le réservoir vers la surface vitrée.

De tels dispositifs de nettoyage sont par exemple connus du document WO2015/010826 US-A-3533526 montre les préambules des revendications 1 et 4.

Dans ce contexte, la présente invention a pour objet un réservoir pour un liquide dédié au nettoyage d'une surface vitrée d'un véhicule automobile, un support destiné à être installé sur le véhicule et apte à recevoir ledit réservoir, ainsi qu'un ensemble comprenant ledit réservoir et ledit support qui coopèrent entre eux.

L'invention vise principalement à proposer de tels réservoir, support et ensemble dédiés au nettoyage d'une surface vitrée d'un véhicule automobile, parebrise notamment, voir encore toute autre surface vitrée du véhicule pouvant être arrosée par le liquide contenu dans le réservoir.

Un but de l'invention est de fiabiliser à moindres coûts les modalités de raccordement tant mécanique que fluidique entre le réservoir et le support.

Un autre but de l'invention est d'améliorer l'ergonomie de l'installation du réservoir dans le support. Il est notamment visé un remplacement commode du réservoir par l'utilisateur, y compris dans le cas où le contenu du réservoir n'est pas totalement épuisé.

Un autre but de l'invention est de proposer des modalités structurellement simples et fiables d'une part de raccordement mécanique entre le réservoir et le support, et d'autre part de raccordement fluidique entre le réservoir et un circuit d'acheminement du liquide vers la surface vitrée.

Un autre but de l'invention est de limiter au mieux, pour une capacité donnée du réservoir, l'encombrement de l'ensemble formé par le réservoir installé sur le support. Il est notamment visé de faciliter l'installation potentielle dudit ensemble sur un véhicule d'une quelconque configuration donnée.

Les buts de l'invention sont atteints, isolément ou en combinaison, par les dispositions décrites ci-après et pouvant être combinées entre elles.

En premier lieu, l'invention porte sur un réservoir pour un liquide dédié au nettoyage d'une surface vitrée d'un véhicule automobile. Le réservoir est équipé d'un goulot étendu, entre ses débouchés, suivant un axe d'extension et pourvu d'un moyen de fixation d'un capuchon de fermeture du réservoir. Le réservoir comprend au moins un dispositif de coulissement du goulot transversalement à son axe d'extension, le dispositif de coulissement étant configuré pour relier mécaniquement le réservoir à un support.

Dans ce contexte, le réservoir de l'invention est caractéristique en ce que le dispositif de coulissement comprend un collet formé par deux parois superposées issues du goulot et s'étendant dans un plan transversal à l'axe d'extension du goulot en ménageant entre elles une gorge et en ce que le réservoir est configuré pour être raccordé à un organe de liaison fluidique équipant le support et reliant le réservoir à un circuit extérieur au support.

Le réservoir peut dès lors être installé sur le support à partir d'un mouvement d'approche transverse à l'axe d'extension du goulot, entraînant un emboîtement par coulissement entre le dispositif de coulissement et un dispositif de glissement du support, procurant ainsi une fixation mécanique entre le réservoir et le support.

Selon une forme de réalisation, le dispositif de coulissement forme un organe de suspension du réservoir lorsque le réservoir est monté sur le support. En d'autres termes, le réservoir est configuré pour être porté en suspension suivant son axe d'extension par l'intermédiaire du dispositif de coulissement, par suite de son installation sur ou dans le support.

Le dispositif de coulissement est par exemple ménagé sur une base du goulot.

Le dispositif de coulissement est avantageusement intégré de moulage au goulot. La structure rigide du goulot est ainsi exploitée pour procurer un soutien ferme du réservoir en suspension, par l'intermédiaire du dispositif de coulissement. Dans ce contexte, le réservoir peut être essentiellement formé d'une poche souple équipé du goulot de structure rigide.

Selon l'invention, le dispositif de coulissement comprend un collet. Un tel collet est formé par deux parois superposées issues du goulot. Les parois superposées s'étendent dans un plan transversal à l'axe d'extension du goulot, en ménageant entre elles une gorge. Le collet est rehaussé par le moyen de fixation et forme l'organe de suspension du réservoir.

Le collet entoure notamment le goulot pour ménager la gorge à sa périphérie. La direction de superposition des parois correspond à l'axe d'extension du goulot. Les parois superposées sont chacune agencées en un disque, la gorge ménagée entre les disques étant de conformation annulaire.

Selon une forme de réalisation, le moyen de fixation est formé d'un filetage ménagé le long du goulot suivant son axe d'extension, tandis que le capuchon comprend un filet coopérant avec ledit filetage.

Selon une autre forme de réalisation, le moyen de fixation est un adhésif disposé sur une arête du goulot, tandis que le capuchon est un opercule collé au goulot par l'adhésif. Un tel opercule peut être aisément retiré ou percé par l'utilisateur.

Le réservoir peut avantageusement comprendre une poche souple solidaire du goulot. La souplesse de la poche est à apprécier relativement à la structure rigide du goulot et du dispositif de coulissement qu'il incorpore. La poche souple est avantageusement formée à partir d'un matériau biodégradable, tandis que le goulot et le capuchon sont formés à partir, par exemple, d'un matériau recyclable.

L'agencement du réservoir en poche souple permet son obtention à moindres coûts et son stockage à vide dans un volume restreint par suite de son pliage, et facilite par ailleurs son installation en suspension à l'intérieur d'un compartiment du support dédié à la réception du réservoir.

La poche souple et le goulot sont avantageusement solidarisés l'un à l'autre par soudage ou collage de la poche souple autour du goulot. Le goulot comporte, selon cet exemple, un prolongement suivant son axe d'extension s'étendant vers l'intérieur de la poche souple à laquelle le prolongement est solidarisé. Un tel prolongement conforte la robustesse du goulot et du dispositif de coulissement qu'il incorpore, et renforce la solidarisation entre la poche souple et le goulot.

Selon une forme de réalisation, le moyen de fixation est avantageusement exploité pour un raccordement du goulot à un bouchon substitué au capuchon lors de l'installation du réservoir dans le support. Le bouchon est avantageusement participant d'un moyen de prélèvement du liquide contenu dans le réservoir, en étant doté d'un tube plongeur introduit à l'intérieur du réservoir par suite de l'installation du bouchon sur le goulot.

En deuxième lieu, l'invention porte sur un support d'au moins un réservoir de liquide destiné à être fixé sur un véhicule. Un tel support comprend notamment au moins une première paroi délimitant au moins en partie un compartiment de réception du réservoir. La première paroi comporte un dispositif de glissement configuré pour autoriser une introduction d'un dispositif de coulissement équipant le réservoir, selon une direction parallèle à un plan d'extension de la première paroi, le dispositif de glissement étant formé par au moins un bord d'une encoche ménagée à travers la première paroi et configurée pour maintenir le réservoir en suspension dans le compartiment par l'intermédiaire d'une gorge du dispositif de coulissement.

Dans ce contexte, le support de l'invention est principalement reconnaissable en ce qu'il comprend un organe de liaison fluidique configuré pour relier le réservoir à un circuit extérieur au support.

La liaison mécanique entre le support et le réservoir est ainsi réalisée à moindres coûts, sans affecter la fiabilité et la fermeté du maintien du réservoir dans le support. Le montage du réservoir dans le support en est aussi facilité.

Selon l'invention, le dispositif de glissement est formé par au moins un bord d'une encoche ménagée à travers la première paroi et configurée pour maintenir le réservoir en suspension dans le compartiment par l'intermédiaire du dispositif de coulissement. Le soutien du réservoir par les bords de l'encoche est plus spécifiquement réalisé par coulissement de ces bords à l'intérieur de la gorge, de sorte que le réservoir est soutenu par la première paroi.

Le dispositif de glissement comprend par exemple un dispositif de retenue agencé pour limiter le déplacement du dispositif de coulissement dans l'encoche selon la direction parallèle au plan d'extension de la première paroi. Le dispositif de retenue retient le goulot dans l'encoche, évitant ainsi que le réservoir sorte du support.

Selon un mode de réalisation, le dispositif de retenue comprend au moins une branche, de préférence deux branches, élastiquement déformable apte à enserrer réversiblement le dispositif de coulissement. Selon l'exemple, le dispositif de retenue comprend deux branches opposées l'une à l'autre. La ou les branches sont agencées pour se déformer dans le plan d'extension de la première paroi du support.

Selon un exemple, la ou les branches sont chacune délimitées au moins par le bord de l'encoche et par un évidement ménagé à travers la première paroi du support.

Le dispositif de retenue peut comprendre une pince qui partage l'encoche en un couloir, apte au guidage du dispositif de coulissement vers la pince, et un fond apte à retenir et entourer le dispositif de coulissement. Le fond de l'encoche enserre le goulot, qui repose en suspension sur la première paroi du support.

L'élasticité du ou des branches du dispositif de glissement est conférée à partir d'une fragilisation de la première paroi du support en bordure de l'encoche. Les branches se déforment par suite du glissement du dispositif de coulissement entre elles, tout en procurant un enserrement réversible du goulot.

Selon une forme de réalisation, le compartiment est délimité par un passage par lequel le réservoir est apte à être introduit à l'intérieur du compartiment et/ou extrait hors du compartiment. Le dispositif de glissement est avantageusement ouvert sur le passage pour recevoir le dispositif de coulissement lors de l'introduction du réservoir à l'intérieur du compartiment.

Le fond de l'encoche est situé à l'opposé de son débouché sur le passage et relie les branches entre elles. Le fond de l'encoche forme un organe de butée contre lequel le goulot est apte à venir en appui, lors de l'installation du réservoir dans le support. La gorge étant annulaire, le fond de l'encoche est dans ce cas courbe d'un rayon correspondant au rayon de la gorge.

Le passage s'étend notamment transversalement au plan de la première paroi du support, en étant par exemple formé par une face largement ouverte du compartiment et orientée perpendiculairement à la première paroi du support.

Selon l'invention, le support comprend un organe de liaison fluidique configuré pour relier le réservoir à un circuit extérieur au support. L'organe de liaison fluidique comprend avantageusement un bouchon configuré pour fermer le goulot du réservoir. Le bouchon est notamment muni d'un tube plongeur à fonction de puiseur du liquide contenu dans le réservoir. Le bouchon est aussi muni d'un embout de raccordement du tube plongeur à un conduit apte au raccordement du bouchon au circuit extérieur, notamment via une pompe équipant le support.

Les modalités de liaisons, respectivement mécanique et fluidique, entre le réservoir et le support sont de structures simples et permettent leur obtention à moindres coûts. Le confort de l'insertion et/ou de l'extraction du réservoir à l'intérieur et/ou vers l'extérieur du compartiment en sont favorisés.

Selon une forme de réalisation, le support comporte avantageusement un organe de fixation de la pompe. La pompe est notamment munie d'un premier raccord au conduit et d'un deuxième raccord au circuit extérieur.

Le support peut comprendre aussi un réceptacle agencé pour y ranger ou disposer un capuchon de fermeture du goulot du réservoir. Ainsi, dans le cas où un réservoir installé sur le support est retiré, son capuchon préalablement rangé dans le réceptacle lors de l'installation du réservoir dans le support est à la disposition de l'utilisateur pour fermer le réservoir. Une telle disposition est notamment utile dans le cas où le contenu du réservoir retiré n'est pas épuisé. Tel est par exemple le cas si l'utilisateur souhaite remplacer un premier réservoir installé sur le support, par un autre réservoir contenant un liquide différent de celui contenu dans le premier réservoir, par exemple un réservoir dit « été - démoustiquant» et un réservoir dit « hiver - dégivrant».

Le réceptacle est avantageusement ménagé sur une face extérieure d'une deuxième paroi du support qui délimite le compartiment. La deuxième paroi est notamment orientée perpendiculairement à la première paroi et est par exemple exploitée pour le montage de l'organe de fixation de la pompe à la face extérieure de la deuxième paroi du support.

Selon une forme de réalisation, le réceptacle est agencé en fourreau borgne comportant une ouverture apte à l'introduction à l'intérieur du réceptacle du capuchon retiré du réservoir. L'ouverture du réceptacle s'étend notamment à l'opposé du fond borgne du fourreau et est par exemple prolongée par une lumière orientée parallèlement à la deuxième paroi pour faciliter le retrait du capuchon hors du réceptacle par l'utilisateur.

Il est à noter que le support et le réservoir sont notamment destinés à coopérer entre eux lorsqu'ils sont installés sur le véhicule pour procurer le nettoyage de la surface vitrée. Ainsi les agencements respectifs du réservoir et du support peuvent être considérés isolément, tout en tenant compte de leur faculté de mise en coopération entre eux pour procurer alors le nettoyage de la surface vitrée dans le cadre de l'invention.

En effet, le réservoir d'une part et le support d'autre part, sont reconnaissables et disponibles individuellement pour leurs installations respectives sur le véhicule. La mise en coopération entre le support et le réservoir est effectuée par un utilisateur pour parvenir au but de l'invention visant le nettoyage de la surface vitrée en exploitant l'ensemble comprenant le réservoir et le support.

Ainsi en troisième lieu, l'invention porte sur un ensemble comprenant un réservoir et un support tels qu'ils sont décrits dans le présent document.

Le réservoir est avantageusement installé en suspension à l'intérieur du compartiment par emboîtement du dispositif de coulissement à l'intérieur du dispositif de glissement.

Selon une forme de réalisation, le réservoir est raccordé à la pompe par l'intermédiaire du bouchon équipé du tube plongeur et de l'embout. Le capuchon de fermeture du réservoir peut alors être placé dans le réceptacle équipant le support prévu à cet effet pour son rangement.

Il ressort de l'invention au moins les résultats notables suivants :
- le réservoir et le support sont individuellement de structure simple et peuvent être obtenus à moindres coûts.
- l'ergonomie du réservoir et l'ergonomie du support sont confortables pour l'utilisateur. Les manipulations pour installer et/ou retirer le réservoir sur et/ou hors du support sont simples et rapides à effectuer, avec commodité pour l'utilisateur.
- la simplicité structurelle du réservoir et du support, ainsi que celles des moyens procurant leurs liaisons respectivement mécanique et fluidique entre eux, limitent les risques d'une défaillance de montage du réservoir dans le support.
- l'encombrement du réservoir, l'encombrement du support, ainsi que l'encombrement de l'ensemble composé du réservoir installé dans le support sont limités pour une capacité donné du réservoir.

D'autres caractéristiques, détails et avantages de la présente invention ressortiront plus clairement à la lecture de la description donnée ci-après à titre indicatif, en relation avec les différents exemples de réalisation de l'invention illustrés sur les figures des planches annexées dans lesquelles :
- la figure 1 et la figure 2 sont des illustrations en perspective d'un réservoir à liquide lave-glace, selon un exemple de réalisation de l'invention.
- la figure 3 est une illustration en perspective d'un détail du réservoir représenté sur la figure 1 et la figure 2.
- la figure 4 est une illustration en perspective d'un support pour un réservoir à liquide, selon un exemple de réalisation de l'invention.
- la figure 5 est une illustration en perspective d'un détail du support représenté sur la figure 4.
- la figure 6 est une illustration en perspective d'un ensemble comprenant un réservoir représenté sur les figures 1 à 3 et un support représenté sur les figures 4 et 5, le réservoir et le support étant séparés l'un de l'autre.
- la figure 7 et la figure 8 montrent des détails en perspective d'un ensemble illustré sur la figure 6, illustrant des étapes successives d'installation du réservoir dans le support.
- la figure 9 est une illustration en perspective d'un ensemble représenté sur la figure 6, le réservoir étant installé dans le support.

Il faut tout d'abord noter que les figures exposent la présente invention de manière détaillée et selon des modalités particulières de sa mise en œuvre. Lesdites figures et leur description détaillée peuvent bien entendu servir à mieux définir l'invention, tant dans ses particularités que dans sa généralité. Pour clarifier et rendre aisée la lecture de la description détaillée qui va être faite de la présente invention, les organes communs représentés sur les différentes figures sont respectivement identifiés dans les paragraphes propres à ces figures avec les mêmes numéros et/ou lettres de référence.

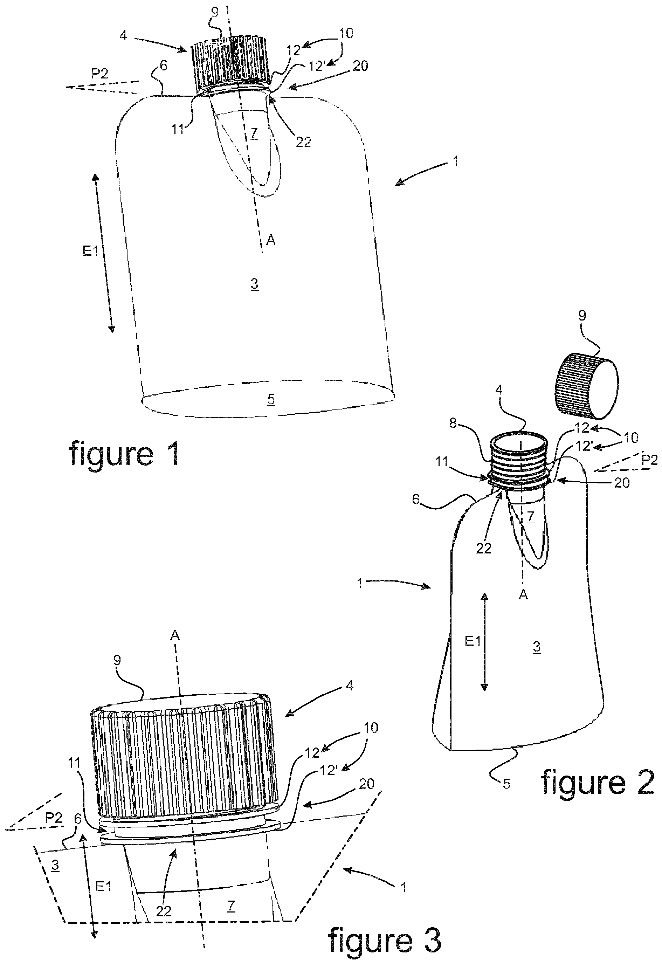

Sur les figures 1 à 3, un réservoir 1 à liquide lave-glace est représenté. Le réservoir 1 est organisé pour pouvoir être aisément installé sur un support placé sur un véhicule automobile. Le réservoir 1 est raccordable à un circuit équipant le véhicule pour acheminer le liquide vers une surface vitrée, notamment le parebrise.

Le réservoir 1 est principalement formé d'une poche souple 3 munie d'un goulot 4 rigide. Le goulot 4 s'étend typiquement entre ses débouchés suivant un axe A d'extension. L'axe A est orienté parallèlement à une direction d'élévation E1 du réservoir 1 entre son fond 5 et son sommet 6, rehaussé du goulot 4. Le goulot 4 du réservoir 1 est de structure rigide et comporte un prolongement 7 pour conforter sa solidarisation avec la poche souple 3. Une telle solidarisation est avantageusement effectuée par moulage lors de la formation du réservoir 1.

Le goulot 4 est muni d'un moyen de fixation 8 pour l'installation d'un capuchon 9 amovible, pour la fermeture de la poche souple 3. Le moyen de fixation 8 est visible sur la figure 2, le capuchon 9 étant retiré de la poche souple 3 en vue de l'utilisation du réservoir 1. Sur les figures 1 et 3, le capuchon 9 est représenté installé sur le goulot 4 en situation de stockage du réservoir 1, par exemple.

Sur l'exemple du réservoir 1 illustré, le moyen de fixation 8 est du type à vissage. D'autres moyens de fixation peuvent être utilisés, tel que par emboîtement élastique du capuchon 9 sur le goulot 4 ou par fixation au moyen d'un dispositif à ergot(s) et baïonnette (s) par exemple. Lorsque le capuchon 9 est installé sur la poche souple 3, sa base est placée en appui contre un collet 10 issu du goulot 4.

Selon un exemple alternatif, le moyen de fixation est un adhésif qui colle un capuchon prenant la forme d'un opercule.

Le collet 10 est de configuration plane et est ménagé à une base 22 du goulot 4 en s'étendant suivant un plan P2 orienté perpendiculairement à l'axe A d'extension du goulot 4. De manière optionnelle, le collet 10 ménage une assise d'appui pour le capuchon 9 lorsqu'il est fixé au goulot 4.

Le collet 10 est délimité par deux parois superposées 12, 12' ménageant entre elles une gorge 11. Les parois 12, 12' du collet 10 sont chacune conformées en disque conférant à la gorge 11 une conformation annulaire entourant le goulot 4 à sa base 22.

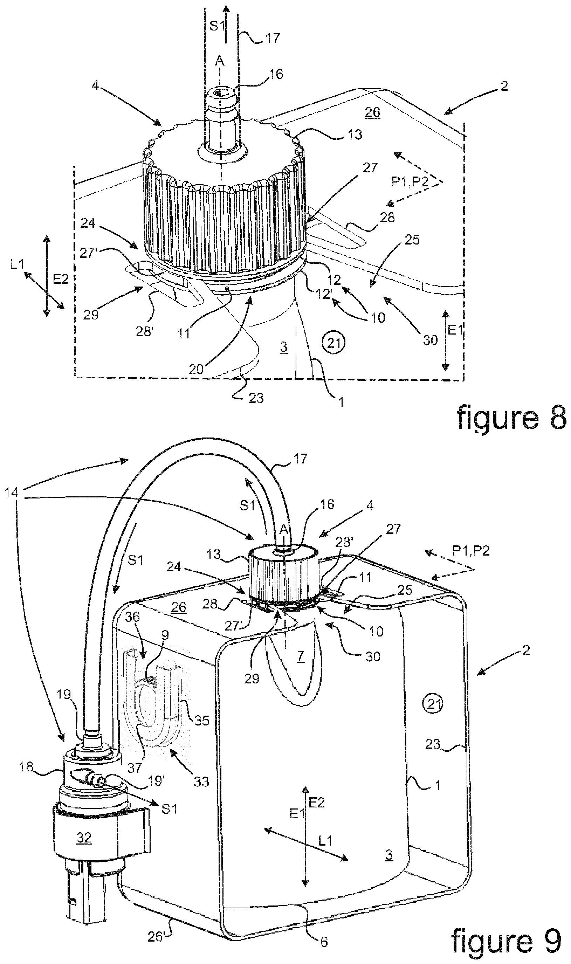

Le collet est agencé en un dispositif de coulissement 20 du réservoir 1 prévu pour coopérer avec un dispositif de glissement du support. Tel qu'illustré sur la figure 9, le dispositif de coulissement 20 formé notamment par le collet 10 est prévu pour coopérer avec un dispositif de glissement 24 équipant un support 2, destiné à être installé sur le véhicule. Le dispositif de coulissement 20 forme un organe de suspension du réservoir 1 lorsqu'il est installé sur le support 2, en situation d'utilisation sur le véhicule.

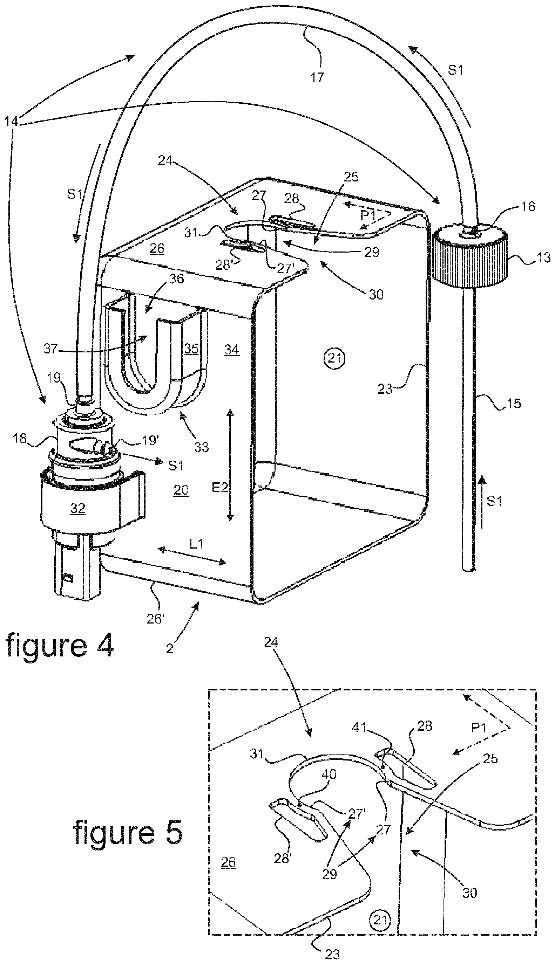

Comme représenté sur les figures 4, 6 et 9, le volume intérieur du réservoir 1 est raccordable à un organe de liaison fluidique 14 équipant le support 2. Lorsque le réservoir est installé sur le support 2, l'organe de liaison fluidique 14 est destiné à prélever le liquide hors du réservoir 1 et à l'acheminer vers un circuit extérieur équipant le véhicule. Le circuit extérieur achemine alors le liquide vers au moins une surface vitrée du véhicule à nettoyer.

L'organe de liaison fluidique 14 comprend un bouchon 13 similaire au capuchon 9 en dimensions et conformation générale, le moyen de fixation 8 étant mis à profit pour fixer le bouchon 13 sur le goulot 4. Le bouchon 13 est doté d'un tube plongeur 15 s'étendant vers l'intérieur du réservoir 1 par suite de l'installation du bouchon 13 sur le goulot 4. Le bouchon 13 est aussi équipé d'un embout 16 de raccordement du tube plongeur 15 à un conduit 17, par exemple souple, constitutif de l'organe de liaison fluidique 14.

Le conduit 17 est aussi raccordé à une pompe 18 appartenant à l'organe de liaison fluidique 14. La pompe 18 est munie d'un premier raccord 19 au conduit 17 et d'un deuxième raccord 19' pour sa jonction avec le circuit extérieur. Le liquide peut ainsi être entraîné suivant un sens S1 de circulation depuis le réservoir 1 vers le circuit extérieur via la pompe 18. Une activation de la pompe 18 procure un prélèvement du liquide hors du réservoir 1 par l'intermédiaire du tube plongeur 15, puis son entraînement à travers le conduit 17 vers la pompe 18 et son refoulement hors de la pompe 18 vers le circuit extérieur.

Sur les figures 4 à 9, le support 2 est agencé en un boîtier délimitant un compartiment 21 de réception du réservoir 1. Le support 2 est susceptible de comporter plusieurs compartiments 21 latéralement juxtaposés pour la réception de plusieurs réservoirs 1. Une telle disposition peut par exemple être prévue dans le cas où l'utilisateur souhaite installer des réservoirs 1 contenant des liquides spécifiques utilisés alternativement. Une telle alternance peut être simplement opérée par déplacement du bouchon 13 de l'un à l'autre des différents réservoirs 1 installés sur le support 2.

L'une des faces latérales du support 2 est largement ouverte pour ménager un passage 23 d'introduction du réservoir 1 dans le compartiment 21, selon une direction L1 perpendiculaire à un plan dans lequel s'inscrit le passage 23. Ce dernier est par exemple ménagé sur l'une des plus grandes faces latérales du support 2, pour favoriser la commodité de l'accès procuré par le passage 23 vers l'intérieur et/ou l'extérieur du compartiment 21. Le support s'étend également selon une direction en élévation E2, entre une paroi inférieure 26' du support 2 et une première paroi 26, ou paroi supérieure, du support 2. Cette première paroi 26 comprend le dispositif de glissement 24 et s'étend dans un plan P1 d'extension.

Ce dispositif de glissement 24 comprend une encoche 25 latéralement ouverte sur le passage 23 pour autoriser l'introduction du collet 10 entre deux bords 27, 27' qui délimite l'encoche 25. Cette introduction intervient en effectuant un mouvement selon une direction parallèle au plan P1 d'extension de la première paroi 26. Les bords 27, 27' délimitant l'encoche 25 sont prévus pour être logés à l'intérieur de la gorge 11 lorsque le réservoir 1 est installé sur le support 2, de part et d'autre du goulot 4 tel qu'illustré sur les figures 8 et 9. Le collet 10 est alors enserré entre des branches 40 et 41 formées dans la première paroi 26. Le dispositif de coulissement 20 prend appui contre la première paroi 26 sous l'effet du poids du réservoir 1.

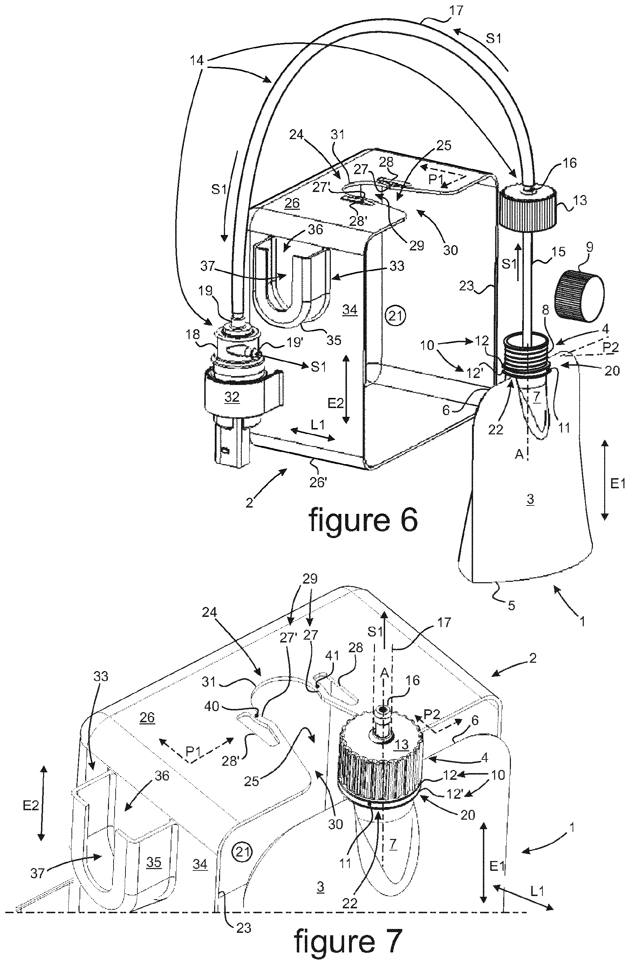

Plus particulièrement visible sur les figures 5 et 7, le dispositif de glissement 24 est agencé sous forme d'une pince formée par les bords 27, 27' disposés en vis-à-vis. Cette pince partage l'encoche 25 en deux parties. Une première partie est un couloir 30, grâce auquel le goulot 4 est guidé pendant sa translation dans l'encoche 25. Une deuxième partie est un fond 31 qui entoure le dispositif de coulissement 20 et le retient, en collaboration avec les branches 40, 41 formant la pince.

Le dispositif de glissement 24 comprend au moins un dispositif de retenue 29 dont la fonction de retenir le réservoir dans le compartiment 21, et empêcher que ce réservoir n'en ressorte. C'est en ce sens que le dispositif de retenue 29 limite le déplacement du dispositif de coulissement 20 dans l'encoche 25, selon la direction parallèle au plan P1 d'extension de la première paroi 26. Un tel dispositif de retenue 29 est par exemple formé par au moins une des branches référencées 40, 41, et avantageusement par les deux.

Les branches 40, 41 sont élastiquement déformables pour enserrer réversiblement le dispositif de coulissement 20, notamment le collet 10. La déformation élastique des branches 40, 41 est provoquée par l'introduction ou l'extraction du collet 10 entre elles.

Une telle élasticité d'au moins une branche 40, 41 est par exemple obtenue en créant un évidement 28, 28' dans la première paroi 26. Ces évidements 28, 28' forme chacun une lumière de forme sensiblement oblongue. La ou les branches 40, 41 sont ainsi délimitées d'un côté par le bord 27, 27' de l'encoche 25, et de l'autre par l'évidement 28, 28' concerné.

Le couloir 30 est évasé et débouche latéralement sur le passage 23, en guidant le collet 10 vers le fond 31. Le fond 31 présente une conformation courbe pour optimiser l'étendue des surfaces de contact entre la première paroi 26 et le dispositif de coulissement 20. La qualité du soutien en suspension du réservoir 1 par le support 2 en est favorisée.

Par ailleurs, le support 2 est équipé d'un organe de fixation 32 de la pompe 18, rapporté sur une deuxième paroi 34 du support 2. Sur l'exemple illustré, l'organe de fixation 32 est agencé en une hanse apte à serrer la pompe contre la deuxième paroi 34 du support 2. La deuxième paroi 34 s'étend perpendiculairement à la première paroi 26, en délimitant l'une des faces latérales du compartiment 21.

La deuxième paroi 34 comporte aussi un réceptacle 33 pour le rangement du capuchon 9 retiré de la poche souple 3, lors de l'installation du réservoir 1 sur le support 2. Ainsi, un risque de perte du capuchon 9 par l'utilisateur est limité en cas de remplacement du réservoir 1 par un autre réservoir 1. En effet, dans ce cas, l'utilisateur dispose du capuchon 9 en permanence à portée de main pour refermer le réservoir 1 retiré.

Sur l'exemple illustré, le réceptacle 33 est agencé en un fourreau 35 à fond borgne et comportant une ouverture 36 débouchant parallèlement au plan P1 de la première paroi 26. L'ouverture 36 est prolongée par une lumière 37 ouverte latéralement vers l'extérieur du support 2. Cette lumière 37 s'étend parallèlement à la deuxième paroi 34. La lumière 37 facilite la manipulation du capuchon 9 disposé à l'intérieur du réceptacle 33, tel qu'illustré sur la figure 9. En effet, l'utilisateur a accès au capuchon 9 à travers la lumière 37 pour l'amener par glissement vers l'ouverture 36, en vue de sa préhension.

Dans cet exemple, l'organe de fixation 32 de la pompe 18 et le réceptacle 33 émergent de la même paroi latérale du support. Il est entendu que ces éléments peuvent être ménagés sur deux parois distinctes du support 2.

Les opérations d'installation du réservoir 1 sur le support 2 sont illustrées successivement sur les figures 6 à 9. Bien évidemment, les opérations de retrait du réservoir 1 hors du support 2, notamment pour son remplacement par un autre réservoir 1, sont effectuées par mises en œuvre inversées des opérations effectuées pour son insertion. L'ordre des opérations données ci-après peut bien entendu varier.

Sur la figure 6, le capuchon 9 est retiré du réservoir 1. Le bouchon 13 est alors installé sur le goulot 4 du réservoir 1 en lieu et place du capuchon 9, en utilisant le moyen de fixation 8. Le tube plongeur 15 est introduit à l'intérieur de la poche souple 3. Le conduit 17 est alors raccordable au bouchon 13 par l'intermédiaire de l'embout 16. On notera que la souplesse du conduit 17 facilite cette opération.

Le conduit 17 est susceptible d'être raccordé au bouchon 13 préalablement à son installation sur le goulot 4, tel qu'illustré sur la figure 6. Le conduit 17 est aussi susceptible d'être raccordé au bouchon 13 postérieurement à l'installation du bouchon 13 sur le réservoir 1 et préalablement à l'installation du réservoir 1 sur le support 2, tel qu'illustré sur la figure 7. Le conduit 17 est encore susceptible d'être raccordé au bouchon 13 postérieurement à l'installation du réservoir 1 dans le compartiment 21, tel qu'illustré sur la figure 8.

De même, le bouchon 13 peut être vissé sur le moyen de fixation 8 après introduction du dispositif de coulissement 20 sur le dispositif de glissement 24.

Sur la figure 7, le réservoir 1 muni du bouchon 13 est approché latéralement selon la direction L1 vers le support 2, pour son introduction à l'intérieur du compartiment 21 à travers le passage 23. Le dispositif de coulissement 20 coulisse sur le dispositif de glissement 24 et est approché progressivement à travers le couloir 30. Les bords 27, 27' de l'encoche 25 sont alors introduits à l'intérieur de la gorge 11, jusqu'à enserrer élastiquement le collet 10. Les branches 40, 41 s'écarte l'une de l'autre sous l'effet de l'introduction du goulot 4 dans l'encoche 25, et reprennent leur position une fois la pince franchie. Le dispositif de coulissement 20 est alors en appui contre le fond 31 de l'encoche 25.

En position d'installation du réservoir 1 à l'intérieur du compartiment 21, les parois 12, 12' superposées du collet 10 sont placées de part et d'autre de la première paroi 26, tel qu'illustré sur la figure 8. Sous l'effet du poids du réservoir **1,** le collet 10 prend appui par gravité contre la première paroi 26 pour son soutien en suspension à l'intérieur du compartiment 21.

## Revendications

1. Réservoir (1) pour un liquide dédié au nettoyage d'une surface vitrée d'un véhicule, le réservoir (1) étant équipé d'un goulot (4) étendu suivant un axe (A) et pourvu d'un moyen de fixation (8) d'un capuchon (9) de fermeture du réservoir (1), le réservoir (1) comprenant au moins un dispositif de coulissement (20) du goulot (4) transversalement à son axe (A) d'extension, le dispositif de coulissement (20) étant configuré pour relier mécaniquement le réservoir (1) à un support (2), **caractérisé en ce que** le dispositif de coulissement (20) comprend un collet (10) formé par deux parois (12, 12') superposées issues du goulot (4) et s'étendant dans un plan transversal à l'axe (A) d'extension du goulot (4) en ménageant entre elles une gorge (11) et **en ce que** le réservoir est configuré pour être raccordé à un organe de liaison fluidique (14) équipant le support (2) et reliant le réservoir (1) à un circuit extérieur au support (2).

2. Réservoir (1) selon la revendication 1, dans lequel le dispositif de coulissement (20) forme un organe de suspension du réservoir (1) lorsque le réservoir (1) est monté sur le support (2).

3. Réservoir (1) selon l'une quelconque des revendications 1 et 2, dans lequel le dispositif de coulissement (20) est ménagé sur une base (22) du goulot (4).

4. Support (2) d'au moins un réservoir (1) de liquide destiné à être fixé sur un véhicule, comprenant au moins une première paroi (26) qui délimite au moins en partie un compartiment (21) de réception du réservoir (1), la première paroi (26) comportant un dispositif de glissement (24) configuré pour autoriser une introduction d'un dispositif de coulissement (20) équipant le réservoir (1), selon une direction parallèle à un plan (P1) d'extension de la première paroi (26), **caractérisé en ce que** le dispositif de glissement (24) est formé par au moins un bord (27, 27') d'une encoche (25) ménagée à travers la première paroi (26) et configurée pour maintenir le réservoir (1) en suspension dans le compartiment (21) par l'intermédiaire d'une gorge du dispositif de coulissement (20), le support comprenant un organe de liaison fluidique (14) configuré pour relier le réservoir (1) à un circuit extérieur au support (2).

5. Support (2) selon la revendication précédente, dans lequel le dispositif de glissement (24) comprend un dispositif de retenue (29) agencé pour limiter le déplacement du dispositif de coulissement (20) dans l'encoche (25) selon la direction parallèle au plan (P1) d'extension de la première paroi (26).

6. Support (2) selon la revendication précédente, dans lequel le dispositif de retenue (29) comprend au moins une branche (40, 41), de préférence deux branches (40, 41), élastiquement déformable apte à enserrer réversiblement le dispositif de coulissement (20).

7. Support (2) selon l'une quelconque des revendications 5 et 6, dans lequel le dispositif de retenue (29) comprend une pince qui partage l'encoche (25) en un couloir (30), apte au guidage du dispositif de coulissement (20) vers la pince, et un fond (31) apte à retenir le dispositif de coulissement (20).

8. Support (2) selon l'une quelconque des revendications 4 à 7, dans lequel le compartiment (21) est délimité par un passage (23) par lequel le réservoir (1) est apte à être introduit à l'intérieur du compartiment (21) et/ou extrait hors du compartiment (21).

9. Support (2) selon l'une quelconque des revendications précédentes, dans lequel l'organe de liaison fluidique (14) comprend un bouchon (13) configuré pour fermer un goulot (4) du réservoir (1), le bouchon (13) étant muni d'un tube plongeur (15) et d'un embout (16) de raccordement du tube plongeur (15) à un conduit (17) apte au raccordement du bouchon (13) au circuit extérieur, via une pompe (18) équipant le support (2).

10. Support (2) selon l'une quelconque des revendications 4 à 9, comprenant un réceptacle (33) agencé pour y disposer un capuchon (9) de fermeture d'un goulot (4) du réservoir (1), le réceptacle (33) étant de préférence ménagé sur une face extérieure d'une deuxième paroi (34) du support (2) qui délimite le compartiment (21).

11. Ensemble comprenant un réservoir (1) selon l'une quelconque des revendications 1 à 3 et un support (2) selon l'une quelconque des revendications 4 à 10.

12. Ensemble selon la revendication 11, dans lequel le réservoir (1) est installé en suspension à l'intérieur du compartiment (21) par emboîtement du dispositif de coulissement (20) à l'intérieur du dispositif de glissement (24).

13. Ensemble selon la revendication 11 ou 12, dans lequel le réservoir (1) est raccordé à une pompe (18) par l'intermédiaire d'un bouchon (13) équipé d'un tube plongeur (15) et d'un embout (16), le capuchon (9) de fermeture du réservoir (1) étant placé dans un réceptacle (33) équipant le support (2).

## Patentansprüche

1. Behälter (1) für eine Flüssigkeit, die zur Reinigung einer Glasfläche eines Fahrzeugs bestimmt ist, wobei der Behälter (1) mit einem Einfüllstutzen (4) ausgestattet ist, der sich entlang einer Achse (A) erstreckt und mit einem Mittel zur Befestigung (8) einer Verschlusskappe (9) des Behälters (1) versehen ist, wobei der Behälter (1) wenigstens eine Vorrichtung zur Verschiebung (20) des Einfüllstutzens (4) quer zu seiner Erstreckungsachse (A) umfasst, wobei die Verschiebevorrichtung (20) dafür ausgelegt ist, den Behälter (1) mit einem Träger (2) mechanisch zu verbinden, **dadurch gekennzeichnet, dass** die Verschiebevorrichtung (20) einen Bund (10) umfasst, der von zwei übereinander angeordneten Wänden (12, 12') gebildet wird, die an den Einfüllstutzen (4) angeformt sind und sich in einer quer zur Erstreckungsachse (A) des Einfüllstutzens (4) verlaufenden Ebene erstrecken, wobei sie zwischen sich eine Auskehlung (11) bilden, und dadurch, dass der Behälter dafür ausgelegt ist, an ein Fluidverbindungsorgan (14) angeschlossen zu werden, mit dem der Träger (2) ausgestattet ist und das den Behälter (1) mit einem Kreislauf außerhalb des Trägers (2) verbindet.

2. Behälter (1) nach Anspruch 1, wobei die Verschiebevorrichtung (20) ein Organ zur Aufhängung des Behälters (1) bildet, wenn der Behälter (1) auf dem Träger (2) angebracht ist.

3. Behälter (1) nach einem der Ansprüche 1 und 2, wobei die Verschiebevorrichtung (20) auf einem Fuß (22) des Einfüllstutzens (4) ausgebildet ist.

4. Träger (2) wenigstens eines Flüssigkeitsbehälters (1), der dazu bestimmt ist, an einem Fahrzeug befestigt zu werden, wenigstens eine erste Wand (26) umfassend, welche wenigstens zum Teil einen Raum (21) zur Aufnahme des Behälters (1) begrenzt, wobei die erste Wand (26) eine Gleitvorrichtung (24) aufweist, die dafür ausgelegt ist, eine Einführung einer Verschiebevorrichtung (20), mit welcher der Behälter (1) ausgestattet ist, in einer zu einer Erstreckungsebene (P1) der ersten Wand (26) parallelen Richtung zu ermöglichen, **dadurch gekennzeichnet, dass** die Gleitvorrichtung (24) von wenigstens einem Rand (27, 27') eines Einschnitts (25) gebildet wird, der durch die erste Wand (26) hindurch ausgebildet ist und dafür ausgelegt ist, den Behälter (1) durch eine Auskehlung der Verschiebevorrichtung (20) im Raum (21) aufgehängt zu halten, wobei der Träger ein Fluidverbindungsorgan (14) umfasst, das dafür ausgelegt ist, den Behälter (1) mit einem Kreislauf außerhalb des Trägers (2) zu verbinden.

5. Träger (2) nach dem vorhergehenden Anspruch, wobei die Gleitvorrichtung (24) eine Haltevorrichtung (29) umfasst, die dafür eingerichtet ist, die Verlagerung der Verschiebevorrichtung (20) im Einschnitt (25) in der zur Erstreckungsebene (P1) der ersten Wand (26) parallelen Richtung zu begrenzen.

6. Träger (2) nach dem vorhergehenden Anspruch, wobei die Haltevorrichtung (29) wenigstens einen Schenkel (40, 41), vorzugsweise zwei Schenkel (40, 41), die elastisch verformbar sind, umfasst, die geeignet sind, die Verschiebevorrichtung (20) lösbar einzuspannen.

7. Träger (2) nach einem der Ansprüche 5 und 6, wobei die Haltevorrichtung (29) eine Klemme umfasst, welche den Einschnitt (25) in einen Korridor (30), der für die Führung der Verschiebevorrichtung (20) in Richtung der Klemme geeignet ist, und einen Boden (31), der geeignet ist, die Verschiebevorrichtung (20) festzuhalten, aufteilt.

8. Träger (2) nach einem der Ansprüche 4 bis 7, wobei der Raum (21) von einem Durchgang (23) begrenzt wird, über welchen der Behälter (1) ins Innere des Raumes (21) einführbar und/oder aus dem Raum (21) entfernbar ist.

9. Träger (2) nach einem der vorhergehenden Ansprüche, wobei das Fluidverbindungsorgan (14) einen Deckel (13) umfasst, der dafür ausgelegt ist, einen Einfüllstutzen (4) des Behälters (1) zu verschließen, wobei der Deckel (13) mit einem Tauchrohr (15) versehen ist, und mit einem Ansatzstück (16) zum Anschluss des Tauchrohres (15) an eine Leitung (17), die für den Anschluss des Deckels (13) an den äußeren Kreislauf über eine Pumpe (18), mit welcher der Träger (2) ausgestattet ist, geeignet ist.

10. Träger (2) nach einem der Ansprüche 4 bis 9, welcher ein Aufnahmeelement (33) umfasst, das dafür eingerichtet ist, darin eine Verschlusskappe (9) eines Einfüllstutzens (4) des Behälters (1) anzuordnen, wobei das Aufnahmeelement (33) vorzugsweise auf einer Außenseite einer zweiten Wand (34) des Trägers (2), welche den Raum (21) begrenzt, ausgebildet ist.

11. Anordnung, welche einen Behälter (1) nach einem der Ansprüche 1 bis 3 und einen Träger (2) nach einem der Ansprüche 4 bis 10 umfasst.

12. Anordnung nach Anspruch 11, wobei der Behälter (1) durch Einstecken der Verschiebevorrichtung (20) ins Innere der Gleitvorrichtung (24) aufgehängt im Inneren des Raumes (21) angebracht ist.

13. Anordnung nach Anspruch 11 oder 12, wobei der Behälter (1) über einen Deckel (13), der mit einem Tauchrohr (15) und einem Ansatzstück (16) ausgestattet ist, an eine Pumpe (18) angeschlossen ist, wobei die Verschlusskappe (9) des Behälters (1) in einem Aufnahmeelement (33) angeordnet ist, mit dem der Träger (2) ausgestattet ist.

## Claims

1. Tank (1) for a liquid dedicated to the cleaning of a glazed surface of a vehicle, the tank (1) being equipped with a neck (4) extended along an axis (A) and provided with a fixing means (8) for a cap (9) for closing the tank (1), the tank (1) comprising at least one device (20) for sliding the neck (4) transversely to its axis (A) of extension, the sliding device (20) being configured to mechanically link the tank (1) to a support (2), **characterized in that** the sliding device (20) comprises a collar (10) formed by two superposed walls (12, 12') emerging from the neck (4) and extending in a plane transversal to the axis (A) of extension of the neck (4) in forming between them a groove (11), and **in that** the tank is configured to be connected to a fluidic link member (14) with which the support (2) is equipped and linking the tank (1) to a circuit external to the support (2).

2. Tank (1) according to Claim 1, wherein the sliding device (20) forms a tank suspension member (1) when the tank (1) is mounted on the support (2).

3. Tank (1) according to either one of Claims 1 and 2, wherein the sliding device (20) is formed on a base (22) of the neck (4).

4. Support (2) for at least one tank (1) of liquid intended to be fixed onto a vehicle, comprising at least one first wall (26) which at least partly limits a compartment (21) for receiving the tank (1), the first wall (26) comprising a slip device (24) configured to allow introduction of a sliding device (20) with which the tank (1) is equipped, in a direction parallel to a plane (P1) of extension of the first wall (26), **characterized in that** the slip device (24) is formed by at least one edge (27, 27') of a notch (25) formed through the first wall (26) and configured to hold the tank (1) suspended in the compartment (21) via a groove of the sliding device (20), the support comprising a fluidic link member (14) configured to link the tank (1) to a circuit external to the support (2).

5. Support (2) according to the preceding claim, wherein the slip device (24) comprises a retaining device (29) arranged to limit the movement of the sliding device (20) in the notch (25) in the direction parallel to the plane (P1)of extension of the first wall (26).

6. Support (2) according to the preceding claim, wherein the retaining device (29) comprises at least one branch (40, 41), preferably two branches (40, 41), that are elastically deformable able to reversibly grip the sliding device (20).

7. Support (2) according to either one of Claims 5 and 6, wherein the retaining device (29) comprises a clamp which divides the notch (25) into a corridor (30), capable of guiding the sliding device (20) towards the clamp, and a bottom (31) capable of retaining the sliding device (20).

8. Support (2) according to any one of Claims 4 to 7, wherein the compartment (21) is delimited by a passage (23) by which the tank (1) can be introduced into the compartment (21) and/or extracted from the compartment (21) .

9. Support (2) according to any one of the preceding claims, wherein the fluidic link member (14) comprises a cap (13) configured to close a neck (4) of the tank (1), the cap (13) being provided with a dip tube (15) and a fitting (16) for connecting the dip tube (15) to a pipe (17) capable of connecting the cap (13) to the external surface, via a pump (18) with which the support (2) is equipped.

10. Support (2) according to any one of Claims 4 to 9, comprising a receptacle (33) arranged to position therein a cap (9) for closing a neck (4) of the tank (1), the receptacle (33) being preferably formed on an outer face of a second wall (34) of the support (2) which delimits the compartment (21).

11. Assembly comprising a tank (1) according to any one of Claims 1 to 3 and a support (2) according to any one of Claims 4 to 10.

12. Assembly according to Claim 11, wherein the tank (1) is installed suspended inside the compartment (21) by fitting the sliding device (20) into the slip device (24) .

13. Assembly according to Claim 11 or 12, wherein the tank (1) is connected to a pump (18) via a cap (13) equipped with a dip tube (15) and a fitting (16), the cap (9) for closing the tank (1) being placed in a receptacle (33) with which the support (2) is equipped.
